# EUROPÄISCHE PATENTSCHRIFT

(11) **EP 2 810 154 B1**
(45) Veröffentlichungstag und Bekanntmachung des Hinweises auf die Patenterteilung: **06.03.2019**
(21) Anmeldenummer: 13705732.9
(22) Anmeldetag: 30.01.2013
(51) Int. Cl.: G06F 3/0488, G07F 19/00, G09B 21/00

(54) **HILFSVORRICHTUNG FÜR SEHBEHINDERTE PERSONEN ZUR BEDIENUNG EINES TOUCHSCREENS INSBESONDERE EINES GELDAUTOMATEN**
AID DEVICE FOR VISUALLY IMPAIRED PERSONS FOR OPERATING A TOUCH SCREEN, IN PARTICULAR OF AN AUTOMATED TELLER MACHINE
DISPOSITIF D'AIDE POUR PERSONNES MALVOYANTES PERMETTANT L'UTILISATION D'UN ÉCRAN TACTILE, EN PARTICULIER D'UN DISTRIBUTEUR AUTOMATIQUE DE BILLETS

(30) Priorität: 30.01.2012 DE 102012100717
(43) Veröffentlichungstag der Anmeldung: 10.12.2014
(73) Patentinhaber: Wincor Nixdorf International GmbH, 33106 Paderborn (DE)
(72) Erfinder: GOLÜKE, Peter, 33106 Paderborn (DE)
(86) Internationale Anmeldenummer: PCT/EP2013/051736
(87) Internationale Veröffentlichungsnummer: WO 2013/113725

(56) Entgegenhaltungen:
- CN-A- 101 753 666
- CN-Y- 201 060 481
- GB-A- 2 382 291
- JP-A- 2008 140 245

## Beschreibung

Die Erfindung betrifft eine Hilfsvorrichtung zur Eingabe von Informationen mit Hilfe eines Touchscreens. Ferner betrifft die Erfindung eine Anordnung aus einem Touchscreen und einer solchen Hilfsvorrichtung sowie eine Vorrichtung zur Handhabung von Wertscheinen mit einer entsprechenden Touchscreen-Anordnung.

Bei immer mehr Selbstbediengeräten, beispielsweise Geldautomaten, automatischen Kassensystemen und/oder Vorrichtungen zur Handhabung von Münzen, erfolgt die Bedienung heutzutage über einen Touchscreen und nicht mehr über eine klassische Tastatur. Für die Bedienung werden auf dem Touchscreen insbesondere Auswahlfelder angezeigt, die bei einer entsprechenden Berührung über die die Bedienpersonen eine entsprechende Information zur Bedienung des Gerätes eingeben. Bei einem Geldautomat wird insbesondere auch die Tastatur zur Eingabe der PIN, das sogenannte PIN-Pad, eingeblendet, über das die Bedienperson des Geldautomaten nach der Eingabe ihrer EC-Karte die der EC-Karte zugeordnete PIN zur Autorisierung eingeben muss.

Bei klassischen Tastaturen, d.h. Tastaturen, bei denen die Tasten als physische Tasten, insbesondere aus Edelstahl, ausgebildet waren, wurde die Bedienbarkeit des Selbstbediengerätes durch sehbehinderte Personen dadurch erreicht, dass an mindestens einer der Tasten der Tastatur eine erstastbare Markierung vorgesehen war, so dass die sehbehinderte Person sich über die haptische Erfassung dieser Markierung auf der Tastatur orientieren konnte und somit das Geräte bedienen konnte.

Aus dem Dokument GB 2 382 291 A ist eine Eingabehilfe für sehbehinderte Personen zur Bedienung von Touchscreens bekannt, die auf den Touchscreen aufgelegt wird und ertastbare Symbole auf ihren Knöpfen hat, sodass eine sehbehinderte Person die Knöpfe und über Betätigung der Knöpfe der Eingabehilfe die eigentlichen Felder des Touchscreens betätigen kann.

Weitere Eingabehilfen für sehbehinderte Personen sind aus den Dokumenten JP 2008 140245 A und CN 101 753 666 A bekannt.

Es ist Aufgabe der Erfindung, eine Hilfsvorrichtung für sehbehinderte Personen zur Eingabe von Informationen mit Hilfe eines Touchscreen anzugeben, mit deren Hilfe sehbehinderte Personen einen Touchscreen auf einfache Weise bedienen können.

Diese Aufgabe wird durch eine Hilfsvorrichtung mit den Merkmalen des Anspruchs 1 gelöst. Vorteilhafte Weiterbildungen der Erfindung sind in den abhängigen Ansprüchen angegeben.

Erfindungsgemäß umfasst die Hilfsvorrichtung mehrere ertastbare Eingabehilfselemente, die entsprechend der über eine Berührung betätigbaren Auswahlfelder einer vorbestimmten Anzeige des Touchscreens angeordnet sind. Hierbei sind Eingabehilfselemente derart angeordnet, dass jedes Eingabehilfselement einem Auswahlfeld eindeutig zuordenbar ist, so dass die Auswahlfelder von einer sehbehinderten Person bei entsprechender Positionierung der Hilfsvorrichtung vor dem Touchscreen betätigbar sind.

Hierdurch wird erreicht, dass ein Touchscreen durch eine sehbehinderte Person auf einfache Weise bedient werden kann, indem diese die Hilfsvorrichtung derart vor dem Touchscreen positioniert, dass die für die sehbehinderte Person ertastbaren Eingabehilfselemente vor den Auswahlfeldern angeordnet sind, so dass die sehbehinderte Person durch Ertasten der ertastbaren Eingabehilfselemente und deren Betätigung die unterhalb der Eingabehilfselemente angeordneten Auswahlfelder des Touchscreens betätigen kann. Somit kann der Touchscreen durch sehbehinderte Personen bedient werden, ohne dass hierzu konstruktive Änderungen an dem Touchscreen selbst notwendig wären. Die Hilfsvorrichtung selbst ist insbesondere leicht tragbar, so dass sie von der sehbehinderten Person jederzeit mitgenommen werden kann.

Die Hilfsvorrichtung weist insbesondere mindestens eine ertastbare Markierung zur haptischen Erfassung einer vorbestimmten Position auf der Hilfsvorrichtung auf. Über diese vorbestimmte Markierung kann sich die sehbehinderte Person orientieren und somit schnell eines der Eingabehilfselemente auffinden. Alternativ kann auch keine solche zusätzlich ertastbare Markierung vorgesehen sein, so dass sich die sehbehinderte Person ausschließlich über die ertastbaren Eingabehilfselemente orientiert.

Die Hilfsvorrichtung hat vorzugsweise ein plattenförmiges Grundelement aus einem nicht elektrisch leitenden Material, an dem die Eingabehilfselemente angeordnet sind. Hierdurch wird erreicht, dass bei der Positionierung der Hilfsvorrichtung vor einem Touchscreen über das Grundelement keine Betätigung des Touchscreens erfolgt, sondern die Auswahlfelder nur dann ausgewählt werden, wenn die Eingabehilfselemente betätigt werden. Das Grundelement ist insbesondere aus einem nicht leitenden elektrischen Kunststoff hergestellt, so dass es kostengünstig herzustellen ist und ein leichtes Gewicht aufweist und somit einfach zu handhaben ist. Das Grundelement und/oder die Eingabehilfselemente sind insbesondere durchsichtig, so dass trotz des Anordnens der Hilfsvorrichtung vor dem Touchscreen eine nicht sehbehinderte Person, beispielsweise eine Person, die die sehbehinderte Person unterstützt, trotzdem die Anzeige des Touchscreens sehen kann.

Bei einer Ausführungsform sind die Eingabehilfselemente als durchgehende Löcher, insbesondere als durchgehende Löcher in dem Grundelement, ausgebildet. Eine sehbehinderte Person kann solche Löcher einfach ertasten und das Auswahlfeld, das sie beabsichtigt zu betätigen, durch das dem Auswahlfeld zugeordnete Loch hindurch betätigen, indem sie durch das Loch hindurch den Anzeigebereich des Touchscreens, insbesondere mit dem Finger, berührt.
Die Hilfsvorrichtung ist somit insbesondere schablonenartig ausgebildet und gibt wie eine Schablone den Aufbau der vorbestimmten Anzeige des Touchscreens wieder.

Bei einer bevorzugten Ausführungsform können die Eingabehilfselemente auch als Tasten ausgebildet sein, die insbesondere an dem Grundelement befestigt sind. Die Tasten sind hierbei insbesondere aus einem elektrisch leitenden Material gefertigt, wobei vorzugsweise wiederum ein elektrisch leitender Kunststoff verwendet wird, so dass eine gewichtsarme Hilfsvorrichtung erreicht wird, die außerdem kostengünstig herzustellen ist. Alternativ können auch nur diejenigen Bereiche der als Eingabehilfselemente dienenden Tasten, die bei einer Betätigung des entsprechenden Eingabehilfselementes mit dem Touchscreen in Berührung kommen, elektrisch leitend ausgebildet sein. Die sehbehinderte Person ertastet die als Eingabehilfselemente dienenden Tasten und betätigt die gewünschte Taste, die bei Betätigung auf den Anzeigebereich des Touchscreens gedrückt wird und somit das entsprechend zugeordnete Auswahlfeld betätigt.

Bei einer besonders bevorzugten Ausführungsform ist auf jeder der Tasten eine ertastbare Markierung angeordnet, wobei die Markierungen insbesondere jeweils Informationen über die Funktion des der jeweiligen Taste zugeordneten Auswahlfeldes umfassen. Somit kann sich die sehbehinderte Person auf einfache Weise schnell auf der Hilfsvorrichtung orientieren und somit die gewünschte Eingabe vornehmen.

Ferner kann auf dem Grundelement jeweils in einer vorbestimmten Position benachbart zu den Eingabehilfselementen jeweils eine ertastbare Markierung angeordnet sein, wobei die Markierung eine Information über die Funktion des dem jeweiligen Eingabehilfselement zugeordneten Auswahlfeldes umfasst. Somit kann insbesondere auch bei der Verwendung von Löchern als Eingabehilfselementen jedem dieser Löcher eine Markierung zugeordnet sein, so dass die Orientierung der sehbehinderten Person vereinfacht wird.

Die Hilfsvorrichtung umfasst insbesondere einen Griff zum manuellen Halten der Hilfsvorrichtung, so dass diese einfach gehandhabt werden kann. Die Eingabehilfselemente sind vorzugsweise entsprechend einer Tastatur, insbesondere einer Geldautomatentastatur, angeordnet. Die vorbestimmte Anzeige des Touchscreens, auf deren Struktur die Hilfsvorrichtung abgestimmt ist, entspricht somit insbesondere der typischen Struktur der Tastatur eines Geldautomaten, insbesondere der Struktur eines sogenannten PIN-Pads.

Die Hilfsvorrichtung kann ein Positionierungselement umfassen, mit dessen Hilfe die Hilfsvorrichtung über den Kontakt zu einem komplementär ausgebildeten Positionierungselementes des Touchscreens in einer vorbestimmten Position relativ zum Touchscreen anordenbar ist, in der die Eingabehilfselemente jeweils vor den zugeordneten Auswahlfeldern angeordnet sind. Somit kann die Hilfsvorrichtung auf einfache Weise derart positioniert werden, dass sie exakt über der vorbestimmten Anzeige des Touchscreens angeordnet ist, so dass eine zuverlässige einfache Bedienung erfolgen kann.

Als Positionierungselemente können beispielsweise Rastelemente, über die eine lös- und wiederherstellbare Verbindung zwischen der Hilfsvorrichtung und dem Touchscreen ausbildbar ist. Alternativ kann die Positionierung der Hilfsvorrichtung beispielsweise auch derart erfolgen, dass sich die sehbehinderte Person an einer Kante des Touchscreens, insbesondere des Gehäuses des Touchscreens orientiert und die Hilfsvorrichtung derart anordnet, dass diese in einer Ecke des Anzeigebereiches angeordnet ist. Hierbei kann auf das Vorsehen zusätzlicher Positionierungselemente verzichtet werden, allerdings muss in diesem Fall die virtuelle Tastatur auf dem Touchscreen entsprechend in der Ecke des Anzeigebereichs angezeigt werden.

Ein weiterer Aspekt betrifft eine Anordnung zur Eingabe von Informationen, die einen Touchscreen und eine Hilfsvorrichtung der zuvor beschriebenen Art umfasst. Der Touchscreen hat einen Anzeigebereich, mit dessen Hilfe mindestens eine vorbestimmte Anzeige mit mehreren Auswahlfeldern anzeigbar ist, wobei bei einer Betätigung eines Auswahlfeldes eine dem Auswahlfeld zugeordnete Information eingegeben wird. Eine solche Anordnung ermöglicht einer sehbehinderten Person eine einfache Eingabe von Informationen über den Touchscreen, so dass dieser auf einfache Weise ohne Hilfe bedient werden kann.

Es ist vorteilhaft, wenn die Hilfsvorrichtung ein erstes Positionierungselement umfasst und wenn der Touchscreen ein komplementär zu diesem ersten Positionierungselement ausgebildetes zweites Positionierungselement umfasst. Das erste und zweite Positionierungselement sind derart angeordnet, dass, wenn die beiden Positionierungselemente miteinander in Eingriff sind, die Hilfsvorrichtung und der Touchscreen derart relativ zueinander angeordnet sind, dass die Eingabehilfselemente der Hilfsvorrichtung vor den zugeordneten über den Anzeigebereich des Touchscreens angezeigten Auswahlfeldern angeordnet sind. Somit wird eine einfache Positionierung der Hilfsvorrichtung vor dem Touchscreen erreicht. Die Hilfsvorrichtung ist vorzugsweise an dem Touchscreen befestigt, wenn die beiden Positionierungselemente miteinander in Eingriff sind. Hierzu sind die Positionierungselemente insbesondere derart ausgebildet, dass zwischen ihnen eine lös- und wiederherstellbare Verbindung, beispielsweise eine Rastverbindung, herstellbar ist.

Bei einer alternativen Ausführungsform kann die Hilfsvorrichtung auch fest mit dem Touchscreen verbunden sein, wobei die Hilfsvorrichtung in einer ersten Position vor dem Anzeigebereich und einer zweiten Position nicht vor dem Anzeigebereich angeordnet ist. Die Vorrichtung ist insbesondere mit Hilfe eines Gelenkes klappbar an dem Touchscreen angeordnet, so dass sie zwischen der ersten und der zweiten Position auf einfache Weise hin- und hergeklappt werden kann. Somit kann eine nicht sehbehinderte Person den Touchscreen bedienen, indem sie die Hilfsvorrichtung in der zweiten Position anordnet, und eine sehbehinderte Person, indem sie die Hilfsvorrichtung in der ersten Position anordnet. Dies hat den Vorteil, dass die Hilfsvorrichtung nicht von der sehbehinderten Person mitgebracht werden muss. Umgekehrt hat das Vorsehen einer separaten Hilfsvorrichtung, die von der sehbehinderten Person mitgebracht wird und auch wieder mitgenommen wird, den Vorteil, dass diese vor Vandalismus sicher ist.

Die Hilfsvorrichtung ist insbesondere an dem Gehäuse des Touchscreens angeordnet, so dass eine sichere Befestigung möglich ist.

Ein weiterer Aspekt betrifft eine Vorrichtung zum Handhaben von Wertscheinen, die eine Eingabe und/oder Ausgabeeinheit zur Eingabe und/oder Ausgabe von Wertscheinen, eine Kartenleseeinheit zum Lesen von Daten einer Magnetstreifen- und/oder Chipkarte, eine Bedieneinheit zur Bedienung der Vorrichtung und eine Steuereinheit zur Steuerung der Vorrichtung umfasst. Die Bedieneinheit weist einen Touchscreen zur Eingabe von Informationen auf, wobei die Steuereinheit den Touchscreen derart ansteuert, dass über einen Anzeigebereich des Touchscreens zumindest zur Eingabe einer PIN eine virtuelle Tastatur anzeigbar ist. Ferner hat die Vorrichtung eine Hilfsvorrichtung der zuvor beschriebenen Art, die derart anordenbar ist, dass die Eingabehilfselemente vor den dargestellten Tasten der virtuellen Tastatur angeordnet sind.

Bei der Vorrichtung zur Handhabung von Wertscheinen handelt es sich insbesondere um einen Geldautomaten, ein automatisches Kassensystem und/oder eine automatische Tresorkasse.

Weitere Merkmale und Vorteile der Erfindung ergeben sich aus der folgenden Beschreibung, die die Erfindung anhand von Ausführungsbeispielen im Zusammenhang mit den dargestellten Figuren näher erläutert.

Es zeigen:
- Fig.1: eine schematische Darstellung einer Hilfsvorrichtung gemäß einer ersten Ausführungsform;
- Fig.2: eine schematische Darstellung einer Anordnung eines Touchscreens und der Hilfsvorrichtung nach Fig.1;
- Fig.3: eine schematische Darstellung einer weiteren Anordnung eines Touchscreens und der Hilfsvorrichtung nach Fig.1;
- Fig.4: eine schematische Darstellung einer Hilfsvorrichtung gemäß einer zweiten Ausführungsform;
- Fig.5: eine schematische Darstellung einer Anordnung eines Touchscreens und der Hilfsvorrichtung nach Fig.4;
- Fig.6: eine schematische Darstellung einer weiteren Anordnung eines Touchscreens und der Hilfsvorrichtung nach Fig.4; und
- Fig.7: eine schematische Darstellung eines Geldautomaten.

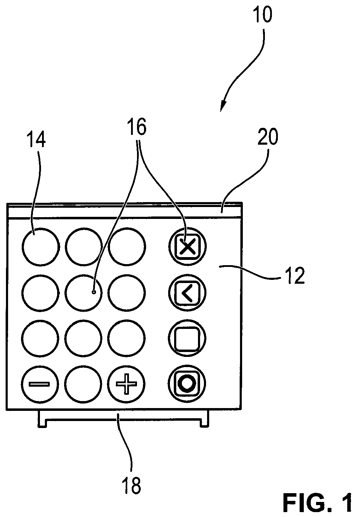

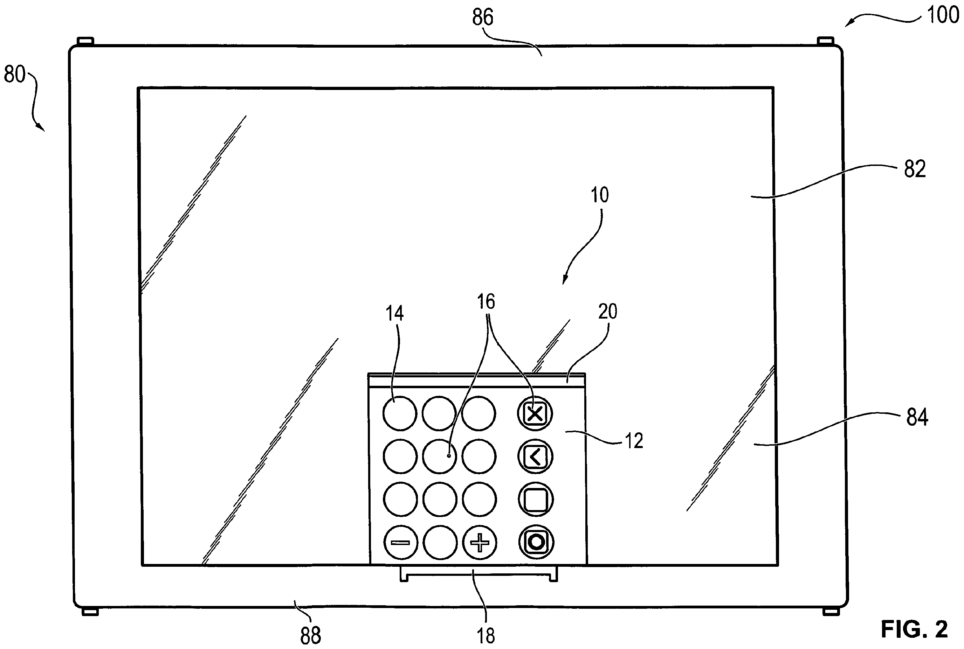

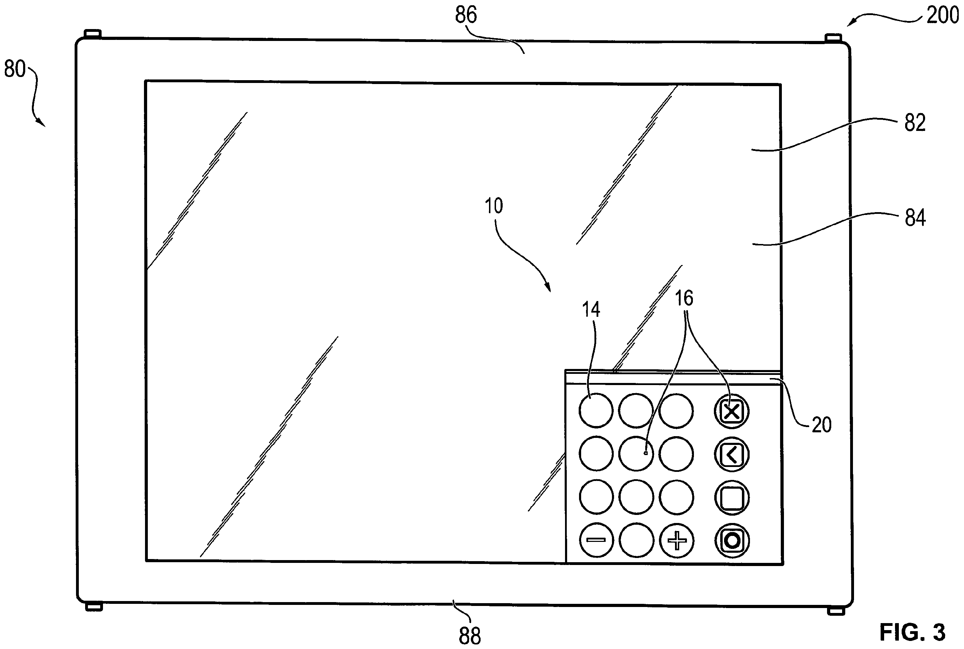

In Fig.1 ist eine schematische Darstellung einer Hilfsvorrichtung 10 für sehbehinderte Personen zur Eingabe von Informationen mit Hilfe eines Touchscreens dargestellt. Die Fig.2 und 3 zeigen jeweils eine schematische Darstellung einer Anordnung 100, 200 bestehend aus einem Touchscreen 80 und der Hilfsvorrichtung 10 nach Fig.1.

Die Hilfsvorrichtung 10 umfasst ein plattenförmiges Grundelement 12, an dem mehrere Eingabehilfselemente angeordnet sind, von denen eines beispielhaft mit dem Bezugszeichen 14 bezeichnet ist. Bei der in Fig.1 gezeigten Ausführungsform sind die Eingabehilfselemente 14 als ertastbare Tasten ausgebildet, die bei einer Betätigung relativ zum Grundelement 12 bewegt werden.

Die Eingabehilfselemente 14 sind entsprechend den Tasten eines bekannten PIN-Pads, wie dieses insbesondere bei Geldautomaten und dergleichen verwendet wird, angeordnet. Bei dem ersten Ausführungsbeispiel sind entsprechend sechzehn Eingabehilfselemente 14 vorgesehen.

Der Touchscreen 80 weist einen Anzeigebereich 82 auf, über den Anzeigen 84 mit mehreren Auswahlfeldern angezeigt werden, wobei bei der Berührung eines solchen Auswahlfeldes eine entsprechende Information eingegeben wird. Ferner umfasst der Touchscreen 80 ein den Anzeigebereich 82 zumindest teilweise umgebendes Gehäuse 86, durch das die in dem Gehäuse 86 angeordneten Bauteile geschützt sind.

Über den Anzeigebereich 82 des Touchscreens 80 kann, beispielsweise wenn es sich um den Touchscreen 80 eines Geldautomaten handelt, insbesondere eine Tastatur zur Eingabe der PIN, ein sogenanntes PIN-Pad, angezeigt werden. Hierzu wird eine virtuelle Tastatur angezeigt, die entsprechend bekannten physischen PIN-Pads aus Edelstahl strukturiert ist. Damit eine solche virtuelle Tastatur von einer sehbehinderten Person bedient werden kann, wird die Hilfsvorrichtung 10, die, wie zuvor beschrieben, ebenfalls die Struktur eines solchen PIN-Pads aufweist, d.h. dass die Eingabehilfselemente 14 entsprechend den Auswahlfeldern der virtuellen Tastatur angeordnet sind, vor der angezeigten virtuellen Tastatur angeordnet, so dass jedem Ausgabefeld eindeutig ein Eingabehilfselement 14 zugeordnet ist.

Wenn die Hilfsvorrichtung 10, wie in den Fig.2 und 3 gezeigt, entsprechend über der virtuellen Tastatur angeordnet ist, wird bei einer Betätigung eines der Eingabehilfselemente 14 das entsprechende Auswahlfeld betätigt, indem das Eingabehilfselement 14 in Richtung des Touchscreens bewegt wird und auf den Anzeigebereich 82 in dem entsprechenden Auswahlfeld drückt. Die virtuelle Tastatur ist in den Fig.2 und 3 nicht sichtbar, da diese entsprechend von der Hilfsvorrichtung 10 verdeckt ist.

Das Grundelement 12 ist insbesondere aus einem nicht leitenden Kunststoff ausgebildet, wohingegen die Eingabehilfselemente 14, oder zumindest diejenigen Teilbereiche der Eingabehilfselemente 14, der bei der Betätigung mit dem Anzeigebereich 82 in Berührung kommt, elektrisch leitend ausgebildet ist. Somit kann über eine Betätigung der entsprechenden Eingabehilfselemente 14 der Touchscreen 80 bedient werden.

An mindestens einem der Eingabehilfselemente 14 ist eine ertastbare Markierung 16 vorgesehen, über die die sehbehinderte Person eine vorbestimmte Position auf der Hilfsvorrichtung 10 haptisch ertasten kann und sich somit auf einfache Weise auf der Hilfsvorrichtung 18 orientieren kann und somit die entsprechenden Eingabehilfselemente 14 leicht auffinden kann. Bei der in Fig.1 gezeigten ersten Ausführungsform sind auf sieben der 16 Eingabehilfselemente 14 entsprechende ertastbare Markierungen vorgesehen.

Bei einer alternativen Ausführungsform können auch keine solchen ertastbaren Markierungen 16 vorgegeben sein. In diesem Fall orientiert sich die sehbehinderte Person über die Anordnung der Eingabehilfselemente 14.

Ferner weist die Hilfsvorrichtung 10 ein erstes Positionierungselement 18 auf, das mit einem komplementär zu ihm ausgebildeten zweiten Positionierungselement 88 des Touchscreens 80 in Eingriff bringbar ist. Wenn die Positionierungselemente 18, 88 miteinander in Eingriff sind, ist die Hilfsvorrichtung 10 derart angeordnet, dass sie genau über der angezeigten virtuellen Tastatur angeordnet ist, so dass die Eingabehilfselemente 14 genau über den zugeordneten Auswahlfeldern angeordnet sind. Über diese Positionierungselemente 18, 88 kann die sehbehinderte Person auf einfache Weise die Hilfsvorrichtung 10 an der richtigen Stelle positionieren. Bei der in Fig.2 gezeigten Anordnung ist das zweite Positionierungselement 88 an dem Gehäuse 86 des Touchscreens 80 angeordnet. Das erste Positionierungselement 18 der Hilfsvorrichtung 10 ist mit ihm in Eingriff.

Bei einer alternativen Ausführungsform der Erfindung kann die Hilfsvorrichtung 10 auch kein Positionierungselement 18 umfassen. In diesem Fall kann, wie in Fig.3 gezeigt, die Positionierung der Hilfsvorrichtung 10 insbesondere derart erfolgen, dass die Hilfsvorrichtung 10 in einer Ecke des Anzeigebereiches 82 positioniert wird, was über die entsprechenden Kanten des Gehäuses 86 leicht erfolgen kann. Entsprechend wird bei diesem Ausführungsbeispiel natürlich auch die virtuelle Tastatur in diesem Teil des Anzeigebereiches 82 angezeigt.

Die Hilfsvorrichtung 10 hat ferner einen Griff 20, über den sie einfach gehandhabt werden kann.

Die Hilfsvorrichtung 10 ist insbesondere derart ausgebildet, dass sie von der sehbehinderten Person zur Bedienung des Touchscreens 80 mitgebracht und nach der Bedienung wieder mitgenommen werden kann. Bei der Positionierung über die Positionierungselemente 18, 88 sind diese insbesondere derart ausgebildet, dass über sie eine lös- und wiederherstellbare Verbindung zur Befestigung der Hilfsvorrichtung 10 an dem Touchscreen 80 herstellbar ist, so dass die Hilfsvorrichtung 10 während der Bedienung nicht von der Bedienperson gehalten werden muss. Alternativ kann die Positionierung über die Positionierungselemente 18, 88 auch erfolgen, ohne dass hierbei die Hilfsvorrichtung 10 an den Touchscreen 80 gehalten ist.

Bei einer weiteren alternativen Ausführungsform kann die Hilfsvorrichtung auch dauerhaft an dem Touchscreen 80 angeordnet sein. In diesem Fall ist insbesondere eine klappbare Verbindung zwischen der Hilfsvorrichtung 10 und dem Touchscreen 80 ausgebildet, über die die Hilfsvorrichtung 10 zwischen einer ersten Position, in der sie, wie in den Fig.2 und 3 gezeigt, vor dem Anzeigebereich 82 angeordnet ist, und einer zweiten Position, in der sie nicht mehr vor dem Anzeigebereich 82 angeordnet ist, geklappt werden kann. Auf diese Weise wird erreicht, dass nicht jede sehbehinderte Person eine eigene Hilfsvorrichtung 10 mitnehmen muss. Das Grundelement 12 und/oder die Hilfselemente 14 sind insbesondere aus einem durchsichtigen Kunststoff ausgebildet, so dass eine nicht sehbehinderte Person, insbesondere eine Begleitperson der sehbehinderten Person, trotz des Anordnens der Vorrichtung 10 vor dem Anzeigebereich 82 die angezeigte virtuelle Tastatur sehen kann.

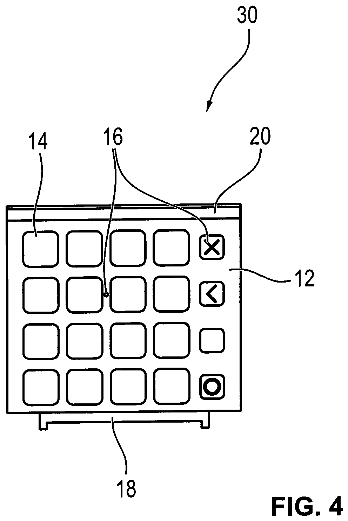

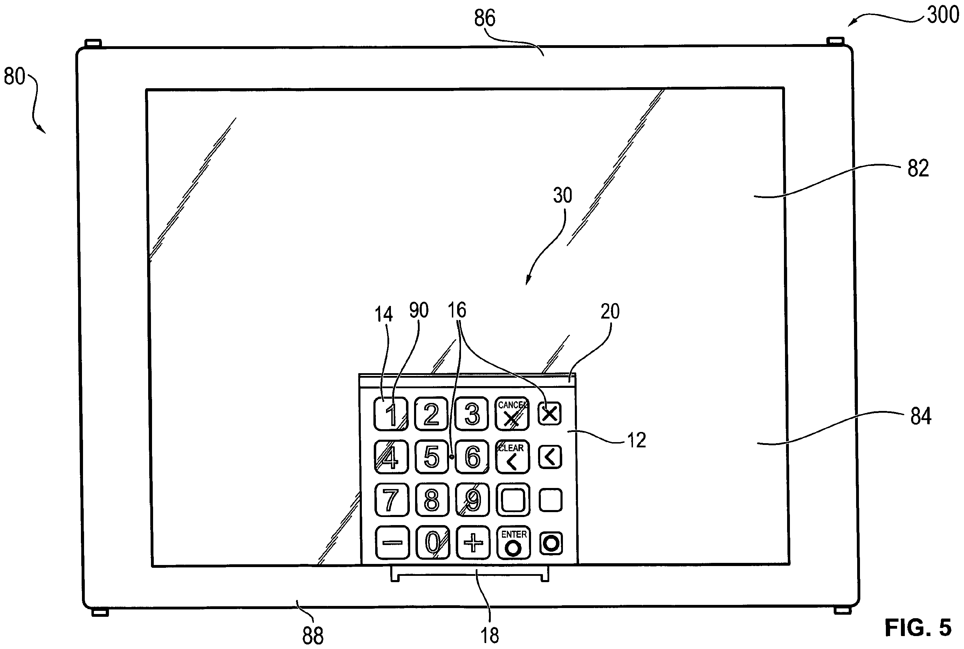

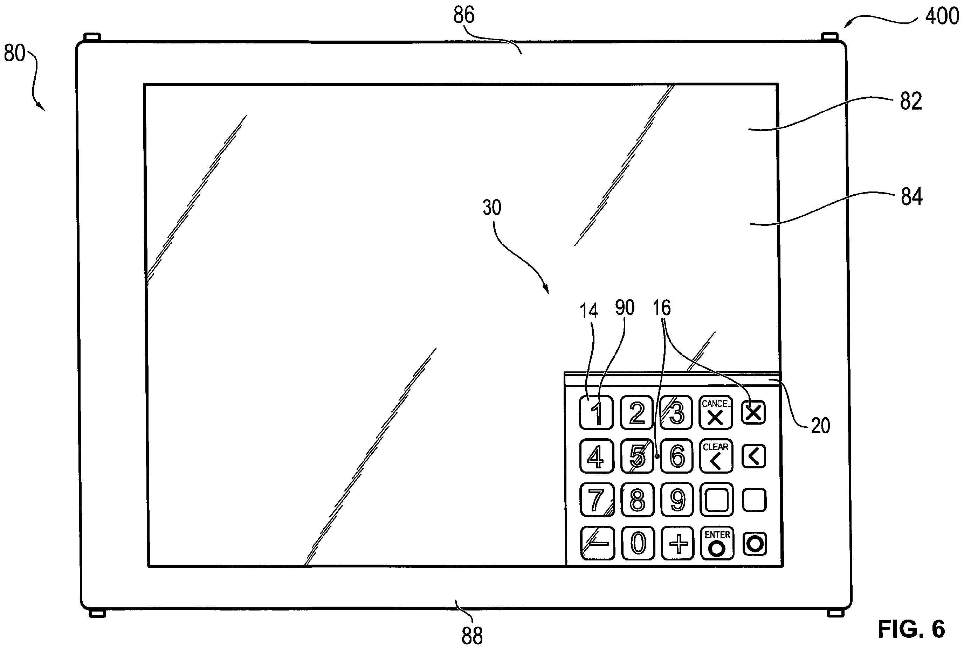

In Fig.4 ist eine schematische Darstellung einer Hilfsvorrichtung 30 gemäß einer zweiten Ausführungsform dargestellt. Die Fig.5 und 6 zeigen jeweils eine Anordnung 300, 400, bestehend aus einem Touchscreen 80 und einer Hilfsvorrichtung 30 gemäß der zweiten Ausführungsform nach Fig.4. In Fig.5 ist die Hilfsvorrichtung 30 wieder über Positionierungselemente 18, 88 mittig angeordnet, wohingegen in Fig.6 wiederum ein Ausführungsbeispiel gezeigt ist, bei dem die Positionierung in einer Ecke des Anzeigebereiches 82 erfolgt.

Die Hilfsvorrichtung 30 gemäß der zweiten Ausführungsform unterscheidet sich von der ersten Ausführungsform nach Fig.1 dadurch, dass als Eingabehilfselemente 14 keine ertastbaren Tasten, sondern als Löcher in dem Grundelement 12 ausgebildet sind. Die sehbehinderte Person kann diese Löcher 14 einfach ertasten und durch das entsprechende Loch 14 hindurch das angezeigte Auswahlfeld 90 der virtuellen Tastatur berühren und somit den Anzeigebereich 82 direkt kontaktieren.

Auch bei dieser Ausführungsform können ertastbare Markierungen 16 vorgesehen sein, wobei diese dann am Grundelement 12 benachbart zu den entsprechenden Löchern 14 vorgesehen sind.

Die Markierungen 16 können insbesondere als Erhebungen und/oder Aussparungen der Oberfläche des Grundelementes 12 bzw. bei der ersten Ausführungsform der Tasten 14 ausgebildet sein.

Bei einer alternativen Ausführungsform der Erfindung kann auch auf einen Griff 20 verzichtet werden. Ferner kann die Hilfsvorrichtung 10, 30 auch für andere Anzeigen 84 als die Anzeige eines PIN-Pad ausgebildet sein, wobei dann entsprechend die Eingabehilfselemente 14 gemäß dieser anderen Anzeige 84 angeordnet sind.

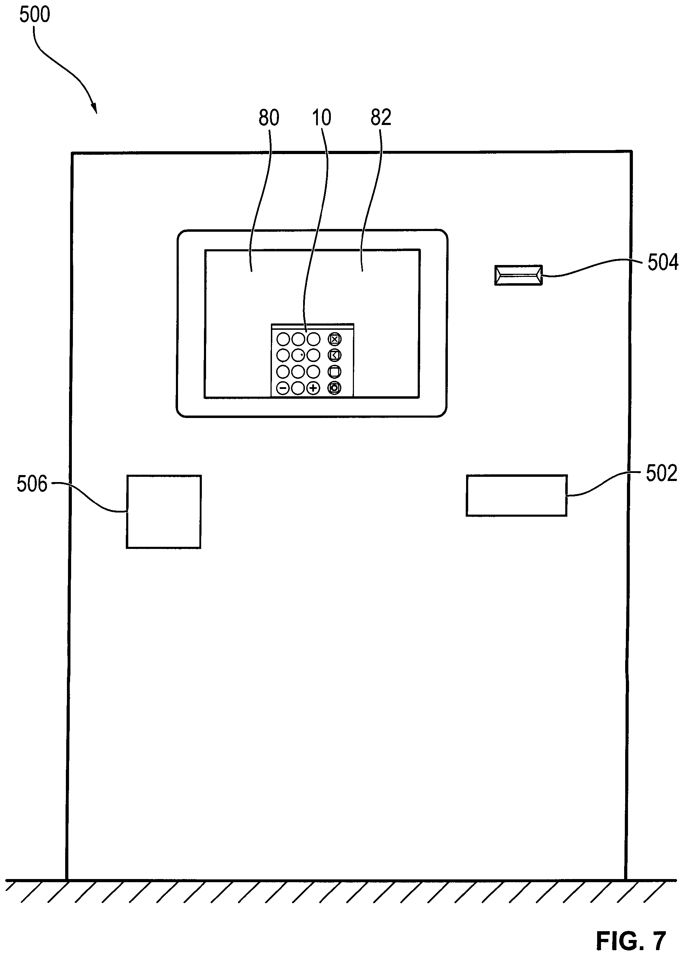

In Fig.7 ist eine schematische Darstellung einer als Geldautomat 500 ausgebildeten Vorrichtung zur Handhabung von Wertscheinen dargestellt. Alternativ kann es sich bei der Vorrichtung auch um ein automatisches Kassensystem oder eine automatische Tresorkasse handeln.

Der Geldautomat 500 kann sowohl als auch reiner Einzahlungsautomat, reiner Auszahlungsautomat oder Recyclingautomat, in den Wertscheine eingezahlt und auch wieder ausgezahlt werden können, ausgebildet sein. Der Geldautomat 500 weist eine Eingabe- und/oder Ausgabeeinheit 502 auf, mit deren Hilfe einzuzahlende Wertscheine eingegeben und/oder auszuzahlende Wertscheine ausgegeben werden können. Ferner hat der Geldautomat 500 eine Kartenleseeinheit 504, mit deren Hilfe Daten einer Magnetstreifen- und/oder Chip-Karte, beispielsweise einer EC-Karte oder Kreditkarte, ausgelesen werden können. Eine Steuereinheit 506 des Geldautomaten 500 steuert nach der Eingabe einer solchen Magnetstreifen- und/oder Chip-Karte einen Touchscreen 80 derart an, dass auf ihm eine virtuelle Tastatur in Form eine PIN-Pads angezeigt wird, über die die Bedienperson des Geldautomaten 500 ihre PIN eingeben muss.

Bei dem in Fig.7 dargestellten Ausführungsbeispiel ist vor dem Anzeigebereich 82, auf dem die virtuelle Tastatur angezeigt wird, eine Hilfsvorrichtung 10 angeordnet, so dass der Geldautomat 500 von einer sehbehinderten Person bedient werden kann. Alternativ kann auch eine Hilfsvorrichtung 30 gemäß der zweiten Ausführungsform vorgesehen sein.

Somit kann der Geldautomat 500 auf einfache Weise von einer sehbehinderten Person bedient werden.

Die Hilfsvorrichtung 10 kann, wie bereits zuvor beschrieben, dauerhaft klappbar an dem Geltautomaten 500 angeordnet sein oder von der sehbehinderten Person an dem Geldautomaten 500 befestigt und nach der Bedienung wieder gelöst werden.

### Bezugszeichenliste

- 10, 30: Hilfsvorrichtung
- 12: Grundelement
- 14: Eingabehilfselement
- 16: Markierung
- 18, 88: Positionierungselement
- 20: Griff
- 80: Touchscreen
- 82: Anzeigebereich
- 84: Anzeige
- 86: Gehäuse
- 90: Auswahlfeld
- 100, 200, 300, 400: Anordnung
- 500: Geldautomat
- 502: Eingabe- und/oder Ausgabeeinheit
- 504: Kartenleseeinheit
- 506: Steuereinheit

## Patentansprüche

1. Hilfsvorrichtung für sehbehinderte Personen zur Eingabe von Informationen mit Hilfe eines Touchscreens,
mit mehreren ertastbaren Eingabehilfselementen (14), die entsprechend den über eine Berührung betätigbaren Auswahlfeldern (90) einer vorbestimmten Anzeige (84) des Touchscreens (80) angeordnet sind,
wobei jedes Eingabehilfselement (14) einem Auswahlfeld (90) eindeutig zuordenbar ist, so dass die Auswahlfelder (90) von der sehbehinderten Person bei entsprechender Positionierung der Hilfsvorrichtung (10, 30) vor dem Touchscreen (80) betätigbar sind,
wobei die Hilfsvorrichtung (10, 30) ein plattenförmiges Grundelement (12) umfasst, und
wobei die Eingabehilfselemente (14) als Tasten ausgebildet sind,
**dadurch gekennzeichnet, dass** das Grundelement (12) und/oder die Eingabehilfselemente (14) durchsichtig ausgebildet sind,
dass die Hilfsvorrichtung (10, 30) ein plattenförmiges Grundelement (12) aus einem nicht elektrisch leitenden Material umfasst, an dem die Eingabehilfselemente (14) angeordnet sind,
und
dass die Tasten (14) aus einem elektrisch leitenden Material gefertigt sind.

2. Hilfsvorrichtung (10, 30) nach einem der vorhergehenden Ansprüche, **dadurch gekennzeichnet, dass** die Tasten (14) aus einem elektrisch leitenden Kunststoff gefertigt sind und dass das plattenförmige Grundelement (12) aus einem nicht elektrisch leitenden Kunststoff ist.

3. Hilfsvorrichtung (10, 30) nach einem der vorhergehenden Ansprüche, **dadurch gekennzeichnet, dass** auf mindestens einer Taste (14), vorzugsweise jeder Taste (14) eine ertastbare Markierung (16) angeordnet ist, wobei die Markierung (16) insbesondere eine Information über die Funktion des der jeweiligen Taste (14) zugeordneten Auswahlfeldes (90) umfasst.

4. Hilfsvorrichtung (10, 30) nach einem der vorhergehenden Ansprüche, **dadurch gekennzeichnet, dass** auf dem Grundelement (12) jeweils an einer vorbestimmten Position benachbart zu den Eingabehilfselementen (14) jeweils eine ertastbare Markierung (16) angeordnet ist, wobei die Markierung (16) insbesondere eine Information über die Funktion des dem jeweiligen Eingabehilfselement (14) zugeordneten Auswahlfeldes (90) umfasst.

5. Hilfsvorrichtung (10, 30) nach einem der vorhergehenden Ansprüche, **dadurch gekennzeichnet, dass** die Hilfsvorrichtung (10, 30) einen Griff (20) zum manuellen Halten der Hilfsvorrichtung (10, 30) umfasst.

6. Hilfsvorrichtung (10, 30) nach einem der vorhergehenden Ansprüche, **dadurch gekennzeichnet, dass** die Eingabehilfselemente (14) entsprechend einer Tastatur, insbesondere einer Geldautomatentastatur, angeordnet sind.

7. Hilfsvorrichtung (10, 30) nach einem der vorhergehenden Ansprüche, **dadurch gekennzeichnet, dass** die Hilfsvorrichtung (10, 30) ein Positionierungselement (18) umfasst, mit dessen Hilfe die Hilfsvorrichtung (10, 30) über den Kontakt zu einem komplementär ausgebildeten Positionierungselement (88) des Touchscreens (80) in einer vorbestimmten Position relativ zum Touchscreen (80) anordenbar ist, in der die Eingabehilfselemente (14) vor den jeweils zugeordneten Auswahlfeldern (90) angeordnet sind.

8. Anordnung (100, 200, 300, 400) zur Eingabe von Informationen,
mit einem Touchscreen (80), der einen Anzeigebereich (82) umfasst, mit dessen Hilfe mindestens eine vorbestimmte Anzeige (84) mit mehreren Auswahlfeldern (90) anzeigbar ist, wobei bei einer Betätigung eines Auswahlfeldes (90) eine dem Auswahlfeld (90) zugeordnete Information eingegeben wird, und
mit einer Hilfsvorrichtung (10, 30) nach einem der Ansprüche 1 bis 7.

9. Anordnung (100, 200, 300, 400) nach Anspruch 8,
**dadurch gekennzeichnet, dass** die Hilfsvorrichtung (10, 30) ein erstes Positionierungselement (18) umfasst, dass der Touchscreen (80) ein komplementär zum ersten Positionierungselement (18) ausgebildetes zweites Positionierungselement (88) umfasst, und dass, wenn das erste Positionierungselement (18) und das zweite Positionierungselement (88) miteinander in Eingriff sind, die Hilfsvorrichtung (10, 30) und der Touchscreen (80) derart relativ zueinander sind, insbesondere derart aneinander befestigt sind, dass die Eingabehilfselemente (14) vor den jeweils zugeordneten Auswahlfeldern (90) angeordnet sind.

10. Anordnung (100, 200, 300, 400) nach Anspruch 8,
**dadurch gekennzeichnet, dass** die Hilfsvorrichtung (10, 30) fest, insbesondere mit Hilfe eines Gelenks klappbar, an dem Touchscreen (80), insbesondere einem Gehäuse (86) des Touchscreens (80), angeordnet ist, und dass die Hilfsvorrichtung (10, 30) in einer ersten Position vor dem Anzeigebereich (82) und in einer zweiten Position nicht vor dem Anzeigebereich (82) angeordnet ist.

11. Vorrichtung (500) zur Handhabung von Wertscheinen,
mit einer Eingabe- und/oder Ausgabeeinheit (502) zur Eingabe und/oder Ausgabe von Wertscheinen,
einer Kartenleseeinheit (504) zum Lesen von Daten einer Magnetstreifen- und/oder Chipkarte,
einer Bedieneinheit zur Bedienung der Vorrichtung (500), die einen Touchscreen (80) zur Eingabe von Informationen umfasst,
einer Steuereinheit (506) zur Steuerung der Vorrichtung (500), die den Touchscreen (80) derart ansteuert, dass über einen Anzeigebereich (82) des Touchscreens (80) zumindest zur Eingabe einer PIN eine virtuelle Tastatur anzeigbar ist, und
mit einer Hilfsvorrichtung (10, 30) nach einem der Ansprüche 1 bis 7, die derart anordenbar ist, dass die Eingabehilfselemente (14) vor den dargestellten Tasten (90) der virtuellen Tastatur angeordnet sind.

## Claims

1. Aid device helping visually impaired persons to input information using a touch screen,
with a plurality of tactile input aid elements (14) arranged in accordance with the selection fields (90) of a predetermined display (84) of the touch screen (80), which selection fields (90) can be actuated by touch,
wherein each input aid element (14) can be uniquely assigned to a selection field (90), such that the selection fields (90) can be actuated by the visually impaired person with the aid device (10, 30) appropriately positioned in front of the touch screen (80),
wherein the aid device (10, 30) has a panel-shaped base element (12), and
wherein the input aid elements (14) are configured as keys,
**characterized in that** the base element (12) and/or the input aid elements (14) are transparent,
**in that** the aid device (10, 30) comprises a panel-shaped base element (12) made of an electrically non-conductive material, on which the input aid elements (14) are arranged, and
**in that** the keys (14) are made of an electrically conductive material.

2. Aid device (10, 30) according to one of the preceding claims, **characterized in that** the keys (14) are made of an electrically conductive plastic, and **in that** the panel-shaped base element (12) is made of an electrically non-conductive plastic.

3. Aid device (10, 30) according to one of the preceding claims, **characterized in that** a tactile marking (16) is arranged on at least one key (14), preferably on each key (14), wherein the marking (16) in particular comprises information concerning the function of the selection field (90) assigned to the respective key (14).

4. Aid device (10, 30) according to one of the preceding claims, **characterized in that** a tactile marking (16) is arranged on the base element (12), in each case at a predetermined position adjacent to the input aid elements (14), wherein the marking (16) in particular comprises information concerning the function of the selection field (90) assigned to the respective input aid element (14).

5. Aid device (10, 30) according to one of the preceding claims, **characterized in that** the aid device (10, 30) comprises a grip (20) for manually holding the aid device (10, 30).

6. Aid device (10, 30) according to one of the preceding claims, **characterized in that** the input aid elements (14) are arranged in accordance with a keypad, in particular a keypad of an automated teller machine.

7. Aid device (10, 30) according to one of the preceding claims, **characterized in that** the aid device (10, 30) comprises a positioning element (18) by means of which the aid device (10, 30) can be arranged in a predetermined position relative to the touch screen (80) via contact with a complementary positioning element (88) of the touch screen (80), in which predetermined position the input aid elements (14) are arranged in front of the respectively assigned selection fields (90).

8. Arrangement (100, 200, 300, 400) for inputting information,
with a touch screen (80) comprising a display region (82) by means of which at least one predetermined display (84) with a plurality of selection fields (90) can be presented, wherein, upon actuation of a selection field (90), an information item assigned to the selection field (90) is input, and
with an aid device (10, 30) according to one of Claims 1 to 7.

9. Arrangement (100, 200, 300, 400) according to Claim 8, **characterized in that** the aid device (10, 30) comprises a first positioning element (18), **in that** the touch screen (80) comprises a second positioning element (88) configured to complement the first positioning element (18), and **in that**, when the first positioning element (18) and the second positioning element (88) are in engagement with each other, the aid device (10, 30) and the touch screen (80) are arranged relative to each other, in particular secured to each other, in such a way that the input aid elements (14) are arranged in front of the respectively assigned selection fields (90).

10. Arrangement (100, 200, 300, 400) according to Claim 8, **characterized in that** the aid device (10, 30) is arranged fixedly, in particular foldably with the aid of a hinge, on the touch screen (80), in particular on a housing (86) of the touch screen (80), and **in that** the aid device (10, 30) in a first position is arranged in front of the display region (82) and in a second position is not arranged in front of the display region (82).

11. Device (500) for handling banknotes, with
a deposit and/or withdrawal unit (502) for depositing and/or withdrawing banknotes,
a card reader (504) for reading data of a magnetic stripe card and/or chip card,
an operating unit for operating the device (500), comprising a touch screen (80) for the input of information,
a control unit (506) for controlling the device (500), which control unit (506) controls the touch screen (80) in such a way that a virtual keypad at least for entering a PIN can be presented via a display region (82) of the touch screen (80), and
with an aid device (10, 30) according to one of Claims 1 to 9, which can be arranged in such a way that the input aid elements (14) are arranged in front of the displayed keys (90) of the virtual keypad.

## Revendications

1. Dispositif d'aide pour personnes malvoyantes destiné à la saisie d'informations à l'aide d'un écran tactile,
comprenant plusieurs éléments d'aide à la saisie (14) détectables au toucher qui sont disposés en correspondance aux champs de sélection (90) pouvant être actionnés par le biais d'un toucher d'un affichage (84) prédéterminé de l'écran tactile (80),
un champ de sélection (90) pouvant être associé univoquement à chaque élément d'aide à la saisie (14), de sorte que les champs de sélection (90) peuvent être actionnés par la personne malvoyante lors d'un positionnement en conséquence du dispositif d'aide (10, 30) devant l'écran tactile (80),
le dispositif d'aide (10, 30) comprenant un élément de base (12) en forme de plaque et les éléments d'aide à la saisie (14) étant réalisés sous la forme de touches, **caractérisé en ce que** l'élément de base (12) et/ou les éléments d'aide à la saisie (14) sont de configuration transparente,
**en ce que** le dispositif d'aide (10, 30) comporte un élément de base (12) en forme de plaque en un matériau électriquement non conducteur, sur lequel sont disposés les éléments d'aide à la saisie (14),
et
**en ce que** les touches (14) sont fabriquées à partir d'un matériau électriquement conducteur.

2. Dispositif d'aide (10, 30) selon l'une des revendications précédentes, **caractérisé en ce que** les touches (14) sont fabriquées à partir d'une matière plastique électriquement conductrice et **en ce que** l'élément de base (12) en forme de plaque est en une matière plastique électriquement non conductrice.

3. Dispositif d'aide (10, 30) selon l'une des revendications précédentes, **caractérisé en ce qu'**un marquage (16) détectable au toucher est disposé sur au moins une touche (14), de préférence chaque touche (14), le marquage (16) comportant notamment une information à propos de la fonction du champ de sélection (90) associé à la touche (14) respective.

4. Dispositif d'aide (10, 30) selon l'une des revendications précédentes, **caractérisé en ce qu'**un marquage (16) détectable au toucher est disposé à chaque fois sur l'élément de base (12) respectivement au niveau d'une position prédéterminée voisine des éléments d'aide à la saisie (14), le marquage (16) comportant notamment une information à propos de la fonction du champ de sélection (90) associé à l'élément d'aide à la saisie (14) respectif.

5. Dispositif d'aide (10, 30) selon l'une des revendications précédentes, **caractérisé en ce que** le dispositif d'aide (10, 30) comporte une poignée (20) servant à maintenir manuellement le dispositif d'aide (10, 30).

6. Dispositif d'aide (10, 30) selon l'une des revendications précédentes, **caractérisé en ce que** les éléments d'aide à la saisie (14) sont disposés en correspondance à un clavier, notamment un clavier de guichet automatique bancaire.

7. Dispositif d'aide (10, 30) selon l'une des revendications précédentes, **caractérisé en ce que** le dispositif d'aide (10, 30) comporte un élément de positionnement (18) à l'aide duquel le dispositif d'aide (10, 30) peut, par le biais du contact avec un élément de positionnement (88) à la configuration complémentaire de l'écran tactile (80), être disposé dans une position prédéterminée par rapport à l'écran tactile (80) dans laquelle les éléments d'aide à la saisie (14) sont disposés devant les champs de sélection (90) respectivement associés.

8. Arrangement (100, 200, 300, 400) destiné à la saisie d'informations,
comprenant un écran tactile (80) qui comporte une zone d'affichage (82) à l'aide de laquelle peut être affiché au moins un affichage (84) prédéterminé comprenant plusieurs champs de sélection (90), une information associée au champ de sélection (90) étant saisie lors d'un actionnement d'un champ de sélection (90), et comprenant un dispositif d'aide (10, 30) selon l'une des revendications 1 à 7.

9. Arrangement (100, 200, 300, 400) selon la revendication 8, **caractérisé en ce que** le dispositif d'aide (10, 30) comporte un premier élément de positionnement (18), **en ce que** l'écran tactile (80) comporte un deuxième élément de positionnement (88) ayant une configuration complémentaire au premier élément de positionnement (18), et **en ce que** lorsque le premier élément de positionnement (18) et le deuxième élément de positionnement (88) sont en prise l'un avec l'autre, le dispositif d'aide (10, 30) et l'écran tactile (80) se trouvent l'un par rapport à l'autre, notamment fixés l'un contre l'autre, de telle sorte que les éléments d'aide à la saisie (14) sont disposés devant les champs de sélection (90) respectivement associés.

10. Arrangement (100, 200, 300, 400) selon la revendication 8, **caractérisé en ce que** le dispositif d'aide (10, 30) est monté à demeure, notamment rabattable à l'aide d'une articulation, au niveau de l'écran tactile (80), notamment d'un boîtier (86) de l'écran tactile (80), et **en ce que** le dispositif d'aide (10, 30), dans une première position, est disposé devant la zone d'affichage (82) et, dans une deuxième position, n'est pas disposé devant la zone d'affichage (82).

11. Dispositif (500) destiné à manipuler des papiers-valeurs, comprenant une unité d'entrée et/ou de sortie (502) servant à l'entrée et/ou à la sortie de papiers-valeurs,
une unité de lecture de cartes (504) destinée à la lecture des données d'une carte à bande magnétique et/ou à puce, une unité d'opération destinée à l'utilisation du dispositif (500), laquelle comporte un écran tactile (80) servant à la saisie d'informations,
une unité de commande (506) destinée à commander le dispositif (500), laquelle commande l'écran tactile (80) de telle sorte qu'un clavier virtuel peut être affiché par le biais de la zone d'affichage (82) de l'écran tactile (80) au moins en vue de la saisie d'un PIN, et comprenant un dispositif d'aide (10, 30) selon l'une des revendications 1 à 9, lequel peut être disposé de telle sorte que les éléments d'aide à la saisie (14) sont disposés devant les touches (90) représentées du clavier virtuel.
